# EUROPÄISCHE PATENTSCHRIFT

(11) **EP 0 479 879 B1**
(45) Veröffentlichungstag und Bekanntmachung des Hinweises auf die Patenterteilung: **31.08.1994**
(21) Anmeldenummer: 90910692.4
(22) Anmeldetag: 26.06.1990
(51) Int. Cl.: G01F 1/08

(54) **EINSTRAHL- BZW. MEHRSTRAHLFLÜGELRADWASSERZÄHLER MIT VORRICHTUNG ZUR KOMPENSIERUNG VON ALTERUNGSFEHLERN**
SINGLE-JET OR MULTI-JET IMPELLER-TYPE WATER METER WITH A DEVICE FOR COMPENSANTING FOR ERRORS DUE TO AGEING
COMPTEUR D'EAU A VOLANTS A JET UNIQUE OU A JETS MULTIPLES AVEC DISPOSITIF COMPENSATEUR D'ERREURS DUES AU VIEILLISSEMENT

(30) Priorität: 27.06.1989 DE 3921021
(43) Veröffentlichungstag der Anmeldung: 15.04.1992
(73) Patentinhaber: E. Wehrle GmbH, D-78120 Furtwangen (DE)
(72) Erfinder: LANGE, Rudolf, D-3150 Peine-Handorf (DE)
(74) Vertreter: Prüfer, Lutz H., Dipl.-Phys.
(86) Internationale Anmeldenummer: EP9001017
(87) Internationale Veröffentlichungsnummer: WO9100500

(56) Entgegenhaltungen:
- CH-A- 146 295
- DE-A- 2 026 131
- US-A- 3 526 133

## Beschreibung

Die Erfindung betrifft einen Einstrahl- bzw. Mehrstrahlflügelradwasserzähler mit einer Vorrichtung zur Kompensierung von Alterungsfehlern.

Bei längerer Benutzung und damit zunehmender Verschmutzung der Meßkammer solcher Wasserzähler kommt es zu einer Plusanzeige, die zusätzlich durch die Nebenstrom-Justiervorrichtung verstärkt wird, da sich insbesondere enge Querschnitte durch Ablagerungen allmählich zusetzen.

Der vorliegenden Erfindung liegt die Aufgabe zugrunde, diesen Nachteil zu vermeiden und insbesondere eine automatisch wirkende Kompensationsvorrichtung zu schaffen, die dem Effekt der Verschmutzung entgegenwirkt und damit einen Wasserzähler schafft, der über einen langen Zeitraum ein konstantes Meßergebnis mit nahezu ± 0 % Fehler in Bezug auf die während der Eichung ermittelten Fehlerkurve erzielt.

Außerdem werden solche Wasserzähler vor ihrem Einsatz durch manuelle Justiervorrichtungen, die meist als Nebenstromvorrichtungen ausgebildet sind, auf die richtige Drehzahl, d.h. auf einen genauen Durchflußwert justiert. Dies geschieht üblicherweise mit einer Stellschraube im Nebenstrom, mit der eine Justierung im Bereich ± 5 % möglich ist.

Ein solcher Wasserzähler ist beispielsweise aus der CH-A-146 295 bekannt, bei dem am Boden des Gehäuses Staurippen angebracht sind. Neben diesen Staurippen bzw. Stegen sind zwei Regulierstifte vorgesehen, durch die sich Regulierkanäle erstrecken, die den Innenraum des Flügelradgehäuses mit dem Außengehäuse des Zählers verbinden. Diese Vorrichtung dient zur Anfangsregulierung des Zählers. Bei einem Öffnen der Kanäle wird der Lauf des Flügelrads verlangsamt, da ein mehr oder weniger starker zusätzlicher Wasserzufluß quer zur eigentlichen Zuflußrichtung stattfindet, die normalerweise tangential auf die Paletten des Flügelrades erfolgt. Ein Verstopfen der Kanäle durch Verschmutzung wird die Drehzahl des Zählers somit noch zusätzlich beschleunigen, einen Alterungsfehler also nicht kompensieren, sondern noch zusätzlich verstärken.

Nach einer Weiterbildung der Erfindung kann die die Langzeitgenauigkeit erhöhende Vorrichtung gleichzeitig zum anfänglichen Einjustieren des Zählers verwendet werden, so daß keine eigene Justiervorrichtung erforderlich ist. Dies ergibt einen einfachen Aufbau des Wasserzählergehäuses.

Die Lösung dieser Aufgabe ist im Anspruch 1 gekennzeichnet.

Zweckmäßige Weiterbildungen der Erfindung sind in den Unteransprüchen offenbart.

Im weiteren wird ein Ausführungsbeispiel der Erfindung anhand der Figuren beschrieben.

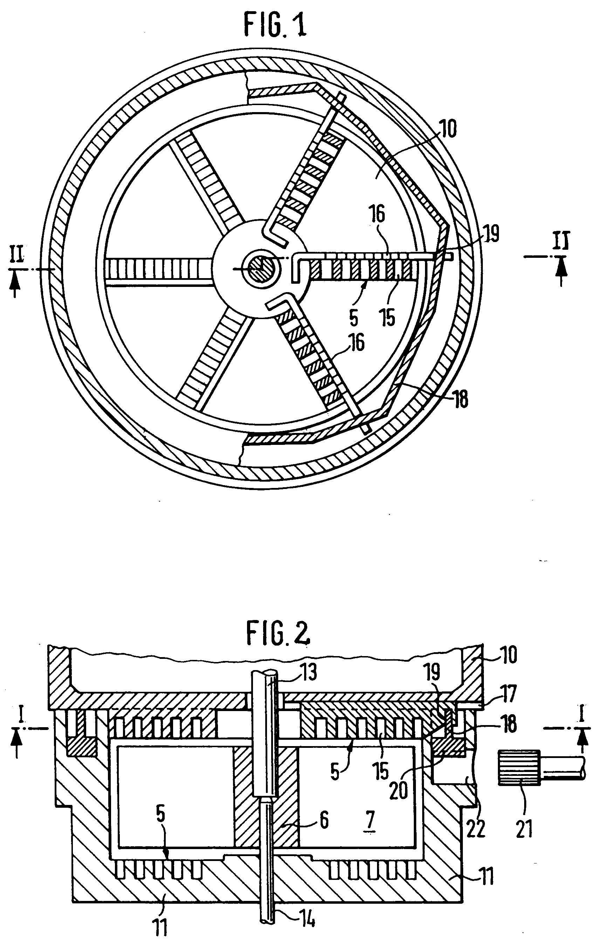

Ein Ausführungsbeispiel für die Lösung gemäß der Erfindung ist in den Figuren 1 und 2 dargestellt.

Die Figur 1 stellt eine Ansicht entlang der Linie I-I der Figur 2 von unten auf den Gehäusedeckel 10 des Werkbechers dar.

Die Figur 2 zeigt die Meßkammer 11 im Schnitt entlang der Linie II-II der Figur 1.

In der Meßkammer 11 dreht sich das Flügelrad 6 mit seinen fünf bis sieben Paletten 7 auf einem Lagerstift 14. Die Meßkammer 11 ist oben durch den nur teilweise dargestellten Meßkammerdeckel 10 abgeschlossen, durch den eine Achse 13 für das nicht dargestellte Meßwerk ragt. An der Unterseite des Deckels 10 sind Staurippen 5 vorgesehen. In den Figuren 1 und 2 nicht dargestellte Öffnungen dienen zum Ein- bzw. Ausströmen der Flüssigkeit.

An der Unterseite des Gehäusedeckels 10 und/oder am Boden der Meßkammer 11 sind radial angeordnete Staurippen 5 vorgesehen, in die eine Anzahl von Nuten 15 eingefräst ist, die eine Breite von 0,7 bis 1,1 mm aufweisen können. Dadurch sind die Rippen quasi kammartig ausgebildet, wobei die Öffnung der Rippen jeweils zum Flügelrad 6 hin gerichtet sind. Diese Nuten erstrecken sich ringförmig über alle Staurippen 5 und werden deshalb im folgenden Ringnuten genannt.

Die Anzahl der Staurippen 5 beträgt beim gezeichneten Ausführungsbeispiel sowohl oben als auch unten jeweils sechs. Diese Staurippen bewirken in bekannter Weise eine Verwirbelung und damit eine Verlangsamung der Drehung des Flügelrades. Durch die in den Staurippen vorgesehenen Ringnuten 15 wird diese Stauwirkung verringert. Im Laufe einer längeren Betriebszeit setzen sich die Nuten jedoch mit Verunreinigungen zu, wodurch der wirksame Querschnitt der Staurippen vergrößert wird. Dies erzeugt eine erhöhte Stauwirkung, die der eingangs erwähnten erhöhten Drehzahl und damit Plusanzeige des Wasserzählers nach längerem Gebrauch entgegenwirkt.

Zur Vorjustierung sind vor einer oder vor mehreren der fest angeordneten Staurippen 5 deckungsgleiche Kammrippen 16 vorgesehen, die in radialer Richtung verschiebbar ausgebildet sind. Damit kann der wirksame Querschnitt der Staurippen zum Justieren des Zählers eingestellt werden.

Beim gezeigten Aufbau sind allen Staurippen 5 Kammrippen 16 zugeordnet. Diese sind in Nuten 17 radial verschiebbar. Um eine gemeinsame Verstellung der Kammrippen 16 zu ermöglichen, ist eine ringförmige Kurvenscheibe 18 vorgesehen, deren oberer Teil kurvenförmig ausgebildet ist und der in in jeder Kammrippe 16 vorgesehene Schlitze 19 eingreift. An der unteren Seite der Kurvenscheibe 18 kann eine Verzahnung 20 vorgesehen sein, in die ein Zahnschlüssel 21 zum Justieren eingreifen kann.

Der obere kurvenförmige Teil der Kurvenscheibe 18 ist so geformt, daß die Kammrippen 16 beim Drehen des Schlüssels 21 in radialer Richtung um ca. 1 bis 2 mm bewegt werden. Zum Einführen des Zahnschlüssels 21 ist eine Bohrung 22 in der Meßkammer 11 vorgesehen.

Die Kammrippen 16 können auch als einteiliger Stern aus Kunststoff gespritzt werden, wobei sie mit einem Mittelteil elastisch so verbunden sind, daß sie um den genannten Betrag von 1 bis 2 mm verschoben werden können. Das Mittelteil kann dabei über eine Haftpassung mit der Meßkammer 11 verbunden sein, wodurch die Montage des Wasserzählers erleichtert wird.

## Patentansprüche

1. Einstrahl- oder Mehrstrahlflügelradwasserzähler mit einer Vorrichtung zur Kompensierung von Alterungsfehlern infolge von Ablagerungen von Schmutz in der ein Flügelrad (6) enthaltenden Messkammer (11), welche Vorrichtung aus mindestens einer überhalb und/oder unterhalb des Flügelrades (6) liegenden radial verlaufenden Staurippe besteht, die innerhalb der von einem Deckel (10) geschlossenen Messkammer (11) liegt bzw. liegen, dadurch gekennzeichnet, daß in der bzw. den Staurippen (5) eine Anzahl von dem Flügelrad zugewandten Nuten (15) vorgesehen sind.

2. Wasserzähler nach Anspruch 1, dadurch gekennzeichnet, daß die Vorrichtung ebenfalls zum anfänglichen Einjustieren des Zählers ausgebildet ist.

3. Wasserzähler nach Anspruch 1, dadurch gekennzeichnet, daß die Nuten (15) eine Breite von 0,7 bis 1,1 mm aufweisen.

4. Wasserzähler nach Anspruch 1, dadurch gekennzeichnet, daß parallel zu jeder Staurippe (5) eine deckungsgleiche Kammrippe (16) vorgesehen ist, die gegenüber der Staurippe (5) in radialer Richtung verschiebbar ist.

5. Wasserzähler nach Anspruch 4, dadurch gekennzeichnet, daß Mittel zur synchronen Verschiebung der Kammrippen (16) vorgesehen sind.

6. Wasserzähler nach Anspruch 5, dadurch gekennzeichnet, daß die Mittel aus einer Kurvenscheibe (18) bestehen, die in einen in jeder Kammrippe (16) vorgesehenen Schlitz (19) eingreift und die eine Verzahnung (20) aufweist, mit der ein Zahnschlüssel (21) für die Justierung in Eingriff gebracht werden kann.

7. Wasserzähler nach Anspruch 4, dadurch gekennzeichnet, daß die Kammrippen (16) als einteiliger Stern ausgebildet sind, wobei die einzelnen Kammrippen elastisch mit einem Mittelteil verbunden sind.

## Claims

1. Single-jet or multi-jet impeller-type water meter with a device for compensating for errors due to ageing caused by deposits of dirt in the measuring chamber (11) containing an impeller (6), which device comprises at least one radially running baffle rib which lies or lie above and/or below the impeller (6) inside the measuring chamber (11), which is closed by a cover (10), characterized in that a number of grooves (15) facing the impeller are provided in the baffle rib or ribs (5).

2. Water meter according to Claim 1, characterized in that the device is likewise designed for the initial adjusting of the meter.

3. Water meter according to Claim 1, characterized in that the grooves (15) have a width of 0.7 to 1.1 mm.

4. Water meter according to Claim 1, characterized in that parallel to each baffle rib (5) there is provided a congruent comb rib (16), which is displaceable in the radial direction with respect to the baffle rib (5).

5. Water meter according to Claim 4, characterized in that means are provided for synchronous displacement of the comb ribs (16).

6. Water meter according to Claim 5, characterized in that the means comprise a cam plate (18), which engages in a slit (19) provided in each comb rib (16) and has a toothing (20), with which an alligator grip wrench (21) can be brought into engagement for the adjustment.

7. Water meter according to Claim 4, characterized in that the comb ribs (16) are formed as a one-part star, the individual comb ribs being flexibly connected to a middle part.

## Revendications

1. Compteur d'eau à volant à jet unique ou à jets multiples comprenant un dispositif destiné à compenser les erreurs dues au vieillissement par suite de dépôts d'impuretés dans une chambre de mesure (11) contenant le volant (6), lequel dispositif se compose d'au moins une nervure de barrage orientée dans le sens radial au-dessus et/ou en-dessous du volant (6) et se trouvant à l'intérieur de la chambre de mesure (11) fermée par un couvercle (10), caractérisé en ce qu'un certain nombre de rainures (15) orientées vers le volant sont prévues dans la ou les nervures de barrage (5).

2. Compteur d'eau selon la revendication 1, caractérisé en ce que le dispositif est également conçu en vue de l'ajustement initial du compteur.

3. Compteur d'eau selon la revendication 1, caractérisé en ce que les rainures (15) présentent une largeur de 0,7 à 1,1 mm.

4. Compteur d'eau selon la revendication 1, caractérisé en ce que parallèlement à chaque nervure de barrage (5), il est prévu une nervure en peigne (16) en coïncidence et mobile dans le sens radial par rapport à la nervure de barrage (5).

5. Compteur d'eau selon la revendication 4, caractérisé en ce que des moyens pour le déplacement synchrone des nervures en peigne (16) sont prévus.

6. Compteur d'eau selon la revendication 5, caractérisé en ce que les moyens se composent d'un disque à came (18), qui se met en prise dans une fente (19) prévue dans chaque nervure en peigne (16) et qui présente une denture (20) avec laquelle une clé dentée (21) peut être mise en prise en vue de l'ajustement.

7. Compteur d'eau selon la revendication 4, caractérisé en ce que les nervures en peigne (16) sont conçues comme une étoile d'un seul tenant, dans laquelle les différentes nervures en peigne sont reliées de manière élastique avec une partie centrale.
